# FASCICULE DE BREVET EUROPEEN

(11) **EP 1 105 630 B1**
(45) Date de publication et mention de la délivrance du brevet: **02.10.2002**
(21) Numéro de dépôt: 99936706.3
(22) Date de dépôt: 06.08.1999
(51) Int. Cl.: F02B 23/10, F02F 3/26

(54) **PISTON A TETE A GUIDAGE ACTIF, ET CHAMBRE DE COMBUSTION ASSOCIEE**
KOLBEN UND BRENNKAMMER MIT AKTIVER GASFÜHRUNG
PISTON WITH ACTIVE GUIDING HEAD, AND ASSOCIATED COMBUSTION CHAMBER

(30) Priorité: 11.08.1998 FR 9810293
(43) Date de publication de la demande: 13.06.2001
(73) Titulaire: MAGNETI MARELLI FRANCE, 92000 Nanterre (FR)
(72) Inventeur: PONTOPPIDAN, Michael, F-92500 Rueil-Malmaison (FR)
(74) Mandataire: Bérogin, Francis
(86) Numéro de dépôt international: FR9901952
(87) Numéro de publication internationale: WO00009872

(56) Documents cités:
- DE-A- 3 913 045
- US-A- 5 115 774
- PATENT ABSTRACTS OF JAPAN vol. 017, no. 686 (M-1529), 15 décembre 1993 (1993-12-15) & JP 05 231155 A (TOYOTA MOTOR CORP), 7 septembre 1993 (1993-09-07)

## Description

L'invention concerne un piston, ayant une tête de géométrie appropriée pour assurer un guidage actif, pour un moteur à combustion interne, en particulier du type à allumage commandé et injection directe de carburant.

L'invention concerne également une chambre de combustion associée à un piston selon l'invention, pour un moteur à combustion interne à allumage commandé et à injection directe de carburant dans la chambre de combustion.

Plus particulièrement, le piston de l'invention délimite une chambre de combustion associée, avec un cylindre, dans lequel ledit piston coulisse axialement, ainsi qu'avec une cavité ménagée, en regard de la tête du piston, dans une culasse rapportée sur chacun des cylindres du moteur, la tête du piston ayant une face d'extrémité, tournée vers la chambre de combustion, et qui présente, à l'intérieur d'une couronne périphérique plane, perpendiculaire à l'axe du piston, d'une part, un évidement en bol à concavité ouverte vers la chambre de combustion, et excentré d'un côté de l'axe du piston, et, d'autre part, un bossage en saillie vers la chambre de combustion par rapport à la couronne périphérique et excentré de l'autre côté de l'axe du piston, lesdits évidement et bossage étant symétriques par rapport à une direction diamétrale de la tête de piston, comme connu par FR 2 757 211.

On sait que de nombreuses géométries différentes ont été récemment proposées pour les faces d'extrémité des têtes de piston de moteurs à combustion interne, et donc aussi pour les chambres de combustion associées, afin d'améliorer le processus de préparation du mélange air/carburant pour réduire simultanément la consommation en carburant de ces moteurs et la pollution qu'ils génèrent par leurs gaz de combustion.

A cet effet, il a été proposé de commander le fonctionnement du moteur, en particulier lorsqu'il est utilisé à faible charge, avec un mélange air/carburant dit pauvre (dont la proportion d'air est supérieure à la proportion stoechiométrique) pouvant être homogène ou stratifié, notamment lorsqu'il est en-dehors des limites d'inflammabilité du mélange homogène, alors qu'aux charges moyennes et fortes du moteur, ce dernier est alimenté en mélange combustible en proportion stoechiométrique, le mélange n'étant riche que dans certaines conditions particulières de fonctionnement du moteur, notamment des conditions transitoires ou lors du démarrage à froid par exemple.

Quelle que soit la richesse du mélange combustible alimentant un moteur, les caractéristiques de la combustion de ce mélange dans une chambre de combustion dépendent de nombreux facteurs, dont des facteurs géométriques, liés à la forme de la chambre de combustion, et donc à la géométrie de la face d'extrémité de la tête de piston correspondante (et donc de la forme de l'évidement et du bossage de la tête d'un piston tel que présenté ci-dessus), des facteurs aérodynamiques, et notamment de vitesse et turbulence du jet liquide de carburant, de l'air aspiré dans le cylindre et de l'écoulement gazeux interne dans la chambre de combustion, ainsi que des facteurs dimensionnels et géométriques de l'injecteur, tels que le nombre, la forme et les dimensions des orifices d'injection, la structure interne et la pression d'alimentation en carburant de l'injecteur.

On comprend que l'optimisation de l'aérodynamique interne d'une chambre de combustion, notamment aux moments de l'admission d'air, de l'injection de carburant et de l'allumage du mélange combustible, soit essentielle dans la conception d'un moteur à allumage commandé et à injection directe, notamment pour contribuer à une préparation aussi bonne que possible du mélange, stoechiométrique ou pauvre, dans une zone de la chambre de combustion favorable à une bonne combustion (bonne inflammabilité et propagation contrôlée du front de flamme à la combustion du mélange).

La géométrie de la chambre de combustion est définie pour promouvoir certains aspects du processus de formation du mélange, notamment les structures globales de l'aérodynamique telles que l'écoulement dénommé « swirl » décrivant une macrostructure de rotation autour de l'axe de la chambre de combustion, et l'écoulement dénommé « tumble », décrivant le mouvement axial permettant de caractériser la déviation du ou des jets de carburant par l'écoulement principal, et donc de mieux apprécier la répartition du carburant et sa vaporisation dans la chambre de combustion. La géométrie doit également favoriser, en fin de phase de compression, un niveau de turbulence dans la charge de combustible pour contrôler localement les paramètres d'échange massique dans le voisinage du front de flamme et déterminer ainsi la vitesse de combustion.

Pour améliorer la répartition et la vaporisation du carburant dans la chambre de combustion ainsi que le mélange air/carburant, afin d'améliorer la combustion, différentes géométries particulières de chambre de combustion ont été récemment proposées, et présentent un ou plusieurs évidements en forme de bol concave ménagé dans la face d'extrémité de la tête de piston et ouvert vers la chambre de combustion, l'injecteur dirigeant le jet de carburant dans l'un de ces bols concaves afin que ce jet soit dévié par ce dernier vers le centre de la chambre de combustion, en regard de la bougie d'allumage, tout en étant simultanément pulvérisé en fines gouttelettes de carburant et/ou vaporisé et mélangé à l'air admis dans la chambre de combustion par l'écoulement et les turbulences qui sont modifiés dans cette dernière par la présence du ou des évidements en bols concaves.

A titre d'exemple, DE 197 13 030 décrit un moteur à combustion interne à cycle à quatre temps, à allumage commandé et injection directe, dans lequel la face d'extrémité d'une tête de piston délimitant une chambre de combustion présente un agencement de nervures de guidage en forme sensiblement de H en saillie vers la chambre de combustion, et comportant deux nervures longitudinales, espacées et parallèles entre elles, et perpendiculaires au plan longitudinal du moteur passant par les axes des cylindres de ce dernier, et réunies l'une à l'autre par une nervure transversale, parallèle au plan longitudinal du moteur et sensiblement perpendiculaire aux nervures longitudinales. Ces nervures, destinées à optimiser le niveau local de turbulence en phase de fin de compression et à amplifier le mouvement aérodynamique de « tumble » du gaz admis dans le cylindre de manière à améliorer la combustion par action, notamment, sur les vitesses et la répartition du carburant et de l'air comburant, délimitent entre elles et avec la couronne périphérique plane de la tête de piston, quatre évidements en bols concaves ouverts vers la chambre. L'un des deux évidements centraux (entre les nervures de la structure en H) reçoit le jet de carburant d'un injecteur implanté latéralement dans la culasse, dans laquelle la cavité délimitant la chambre de combustion est une cavité en forme de toit à deux pans inclinés, l'injecteur débouchant dans la base de l'un des deux pans inclinés, entre deux soupapes d'admission coopérant avec les lumières d'admission dans ce pan incliné, l'axe de l'injecteur étant incliné sur l'axe du piston et de la chambre de combustion et contenu dans un plan radial passant par cet axe, sur lequel est alignée la bougie implantée dans la culasse, au sommet de la chambre de combustion.

Dans DE 197 13 029, la tête de piston présente, sur sa face d'extrémité tournée vers la chambre de combustion, une structure de nervures en T en saillie vers la chambre de combustion, et qui délimite ainsi dans cette face d'extrémité et avec la couronne périphérique plane de la tête de piston, trois évidements en bols concaves ouverts vers la chambre de combustion, et dont l'un reçoit le jet de carburant provenant de l'injecteur, d'axe incliné sur l'axe du piston et de la bougie et dirigé vers cet axe, mais implanté au sommet de la chambre de combustion, à une extrémité du raccordement entre les deux pans inclinés délimitant la cavité en toit ménagée dans la culasse pour former la partie correspondante de la chambre de combustion.

Dans US-5,727,520, la face d'extrémité de la tête de piston présente une nervure de guidage en forme de U très ouvert et en saillie vers la chambre de combustion, de sorte à délimiter deux évidements concaves ouverts vers la chambre de combustion, celui situé à l'intérieur du U recevant le jet de carburant d'un injecteur implanté centralement au sommet de la chambre de combustion en forme de toit à deux pans inclinés, l'injecteur étant faiblement incliné sur l'axe du piston et de la chambre de combustion, alors que la bougie est davantage inclinée sur cet axe et implantée latéralement dans l'un des deux pans inclinés de la cavité en toit de la culasse, du côté de l'admission, le U formé par la nervure de la tête de piston étant ouvert vers l'échappement.

Dans ces différentes réalisations, les nervures délimitant les évidements concaves sur la tête du piston sont essentiellement destinées à modifier l'écoulement dans le sens d'une amplification du mouvement de « tumble », tout en favorisant la turbulence locale, de sorte à augmenter la qualité du mélange air/carburant, son inflammabilité et sa vitesse de combustion, afin, d'une manière générale, d'améliorer la combustion pour réduire la consommation et la pollution.

L'intention à la base de l'invention est d'améliorer encore les performances en matière de consommation et de pollution, par rapport aux réalisations des brevets précités, en améliorant davantage le niveau de turbulence local en phase de fin de compression, ainsi que la répartition et la vaporisation du carburant dans la chambre de combustion, par un concept mixte de guidage aérométrique et de guidage par paroi solide, conduisant à une optimisation de la géométrie de la chambre de combustion pour une bonne préparation en particulier du mélange pauvre stratifié en injection directe, pour garantir une bonne combustion, en fonction de la position de la bougie, ainsi que pour créer un mélange air/carburant dans des proportions stoechiométriques, dans le volume central de la chambre de combustion, en regard de la bougie.

Un autre but de l'invention est d'obtenir les améliorations précitées en perfectionnant une tête de piston du type connu par FR 2 757 211, dont la face d'extrémité délimitant la chambre de combustion présente, à l'intérieur d'une couronne périphérique plane, perpendiculaire à l'axe du piston, d'une part un évidement en bol, à fond concave ouvert vers la chambre de combustion, et excentré d'un côté de l'axe du piston, et, d'autre part, un bossage en saillie vers la chambre de combustion par rapport à la couronne périphérique, et excentré de l'autre côté de l'axe du piston, l'évidement et le bossage étant symétriques par rapport à une direction diamétrale de la tête de piston.

A cet effet, le piston à tête à guidage actif, du type précité et connu par FR 2 757 211, se caractérise selon l'invention en ce que le bossage présente, vu en plan, parallèlement à l'axe du piston, une forme sensiblement en fer à cheval qui entoure partiellement ledit évidement, entouré par ailleurs par un arc de ladite couronne périphérique plane, et en ce que le bossage présente un rebord en surplomb au-dessus du raccordement dudit évidement audit bossage, au moins au niveau de la base du bossage sensiblement en fer à cheval ainsi que des parties des ailes du bossage en fer à cheval qui sont adjacentes à ladite base.

Ainsi, la forme de la chambre de combustion, et plus particulièrement la forme de l'évidement et du bossage du piston, est telle qu'elle créée de la turbulence, propice à la formation d'un bon mélange air/carburant, tout en permettant de dévier vers le centre de la chambre de combustion, le jet de carburant provenant de l'injecteur, et dont le carburant est ainsi mieux pulvérisé et vaporisé.

Avantageusement de plus, le rebord en surplomb ne présente pas une arête vive, mais au contraire est un rebord à section transversale arrondie, et, en outre, l'amplitude du surplomb dudit rebord, considérée dans un plan perpendiculaire à l'axe du piston, s'atténue ou s'estompe progressivement du centre de la base du bossage en fer à cheval vers l'extrémité de chacune des deux ailes dudit bossage, extrémités au niveau desquelles le surplomb est sensiblement annulé.

Cette mesure technique permet de réduire voire d'éliminer des dispositifs qui seraient sinon nécessaires en amont dans le circuit d'alimentation en air, pour créer un mouvement de « swirl » du gaz dans la chambre de combustion, ces dispositifs amont étant complexes et coûteux.

De plus, la profondeur de l'évidement, considérée parallèlement à l'axe du piston, est avantageusement variable et plus importante dans une partie de l'évidement qui est non-adjacente à ladite base dudit bossage en fer à cheval, cette profondeur maximale ainsi plus généralement que le profil du fond de l'évidement étant de préférence fonction notamment du diamètre du piston ainsi que de la position angulaire de l'injecteur par rapport à l'axe du piston et de la chambre de combustion.

Avantageusement de plus, le bossage en fer à cheval présente une face convexe tournée vers la chambre de combustion, et de largeur radiale, par rapport à l'axe du piston, qui est maximum dans ladite direction diamétrale de symétrie de l'évidement et du bossage de la tête de piston et diminue progressivement de part et d'autre de cette direction, dans les ailes du bossage en fer à cheval. Cette caractéristique avantageuse permet de diminuer le volume interne à la chambre de combustion qui est occupé par un mélange gazeux ayant de mauvaises conditions d'inflammabilité et de combustion.

Simultanément, la couronne périphérique plane présente une largeur radiale variable, qui est minimum sur ladite direction diamétrale de symétrie de l'évidement et du bossage, et du côté situé derrière ledit bossage par rapport audit évidement, la largeur radiale de ladite couronne périphérique augmentant progressivement de part et d'autre de sa section de largeur minimale jusque sur les côtés des ailes du bossage en fer à cheval, de sorte que cette forme du bossage associée à cet élargissement de la couronne périphérique plane facilite une chasse latérale des gaz imbrûlés, en particulier vers la zone centrale de combustion.

L'invention a également pour objet une chambre de combustion, pour moteur à combustion interne à allumage commandé et à injection directe, délimitée entre une tête d'un piston, coulissant axialement dans un cylindre du moteur, et ledit cylindre ainsi qu'une cavité ménagée, en regard de ladite tête de piston, dans une culasse rapportée sur ledit cylindre, une bougie d'allumage étant implantée dans la culasse sensiblement coaxialement au piston, et un injecteur de carburant étant également implanté dans la culasse de sorte à délivrer directement dans la chambre de combustion au moins un jet de carburant orienté selon un axe incliné sur l'axe du piston, et la chambre de combustion de l'invention se caractérise en ce que le piston est un piston selon l'invention et tel que défini ci-dessus, l'axe incliné du jet de carburant étant dans un plan sensiblement radial passant par l'axe du piston et par ladite direction diamétrale de symétrie desdits évidement et bossage de la tête de piston, ledit jet de carburant étant dirigé dans ledit évidement et vers ledit rebord en surplomb de la base dudit bossage en fer à cheval, pour obtenir un excellent guidage actif.

En outre, la chambre de combustion est avantageusement d'un type performant connu, dans lequel la cavité correspondante de la culasse est une cavité sensiblement en forme de toit à deux pans inclinés, dans l'un desquels débouchent ledit injecteur et au moins un conduit d'admission d'air sélectivement obturé et ouvert par au moins une soupape d'admission, sensiblement en regard dudit évidement de la tête de piston, tandis qu'au moins un conduit d'échappement, sélectivement obturé et ouvert par au moins une soupape d'échappement, débouche dans l'autre desdits pans inclinés, sensiblement en regard dudit bossage de la tête de piston.

Dans une telle chambre de combustion, d'excellentes performances ont été obtenues avec un injecteur incliné sur l'axe du piston de sorte que l'axe dudit jet de carburant forme un angle compris entre environ 80° et environ 45° sur l'axe du piston.

D'autres avantages et caractéristiques de l'invention ressortiront de la description donnée ci-dessous, à titre non limitatif, d'un exemple de réalisation décrit en référence aux dessins annexés sur lesquels :
- la figure 1 est une vue schématique partielle en coupe d'un moteur à combustion interne comportant un piston et une chambre de combustion selon. l'invention,
- la figure 2 est une vue en plan de la tête du piston de la figure 1 et en coupe du cylindre correspondant.

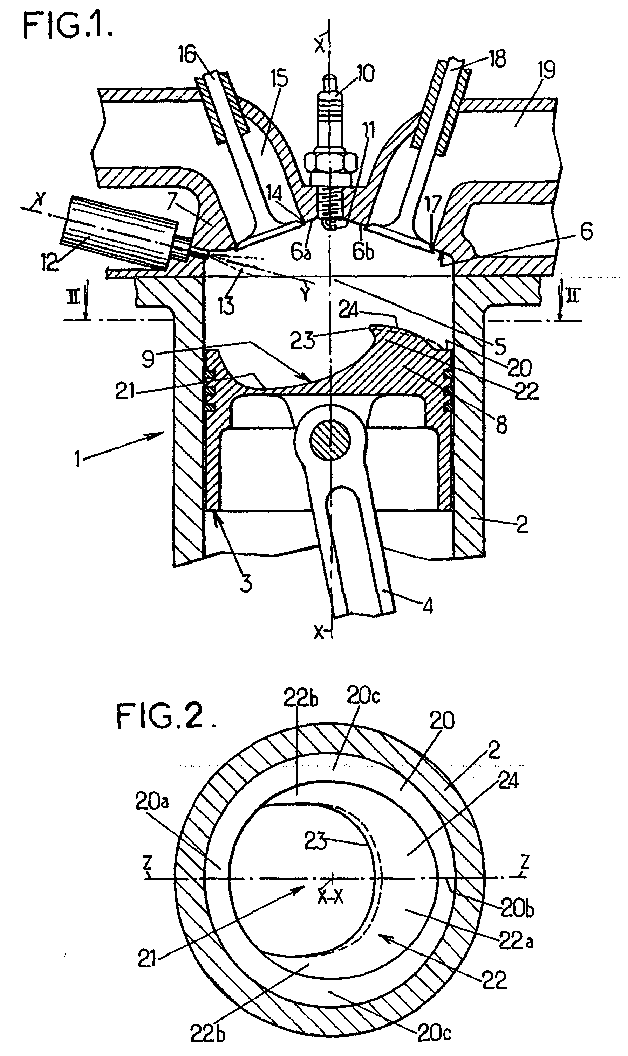

La figure 1 représente de manière schématique et en coupe transversale un moteur 1 à combustion interne, à cycles à quatre temps, à allumage commandé et à injection directe.

Comme connu, dans chaque cylindre 2, aménagé dans le bloc du moteur 1, un piston 3 est monté coulissant axialement en va-et-vient et relié à un vilebrequin (non représenté) par une bielle 4.

Une chambre de combustion 5 est délimitée, à l'extrémité supérieure du piston 2, entre une cavité 6 ménagée, en regard du piston 3, dans une culasse 7 rapportée sur le bloc du moteur 1, et la face d'extrémité 9 de la tête 8 de ce piston 3.

La cavité 6 de la culasse 7 est une cavité dite « en toit », délimitée sensiblement par deux pans inclinés convergent l'un vers l'autre et se raccordant au sommet de la chambre de combustion 5.

Une bougie d'allumage 10 est implantée dans la culasse 7 coaxialement à l'axe X-X du piston 3 et de la chambre de combustion 5 de sorte que ses électrodes 11 débouchent dans le sommet de la chambre de combustion 5.

Un injecteur de carburant 12 est également implanté dans la culasse 7, de sorte qu'il délivre directement dans la chambre de combustion 5 un jet de carburant 13 centré sur un axe Y-Y qui, par commodité, est représenté comme étant l'axe de l'injecteur 12, cet axe Y-Y étant incliné sur l'axe X-X d'un angle qui, dans cet exemple, est de 73° et contenu dans le plan radial passant par l'axe X-X et par le milieu (perpendiculairement au plan de la figure 1) de l'un 6a des deux pans inclinés 6a et 6b délimitant la cavité 6, et à la base de ce pan 6a, à proximité de l'extrémité supérieure du cylindre 2, et sensiblement entre deux lumières d'admission 14, à l'extrémité aval de conduits d'admission d'air tels que 15 et sélectivement fermées et ouvertes par des soupapes d'admission telles que 16, tandis qu'une lumière d'échappement 17, ménagée dans l'autre pan incliné 6b de la cavité 6, est sélectivement fermée et ouverte par une soupape d'échappement 18 à l'extrémité amont d'un conduit d'échappement 19, les conduits d'admission 15 et d'échappement 19 étant aménagés dans la culasse 7.

De l'air est admis dans la chambre de combustion 5 par les lumières d'admission 14, du même côté que l'injecteur 12, tandis que les gaz de combustion, résultant de la combustion du mélange air/carburant dans la chambre de combustion 5 sont évacués de l'autre côté de la chambre de combustion 5 par la lumière d'échappement 17 et le conduit correspondant 19.

En variante, le moteur peut comporter une ou plus de deux soupapes d'admission 16 et/ou une ou plusieurs soupapes d'échappement 18.

La face d'extrémité 9 de la tête de piston 8 est représentée sur la figure 1 en coupe par le plan radial défini par les axes X-X et Y-Y, dans une position intermédiaire entre le point mort bas et le point mort haut, alors que la figure 2 représente cette face d'extrémité 9 de la tête de piston 8 vue en plan dans la direction de l'axe X-X.

Cette face d'extrémité 9 présente une couronne périphérique 20, qui est plane et perpendiculaire à l'axe X-X, et à l'intérieur de laquelle la face d'extrémité 9 présente un évidement 21, sensiblement en forme de bol concave, à concavité tournée vers la chambre de combustion 5, et excentré d'un côté de l'axe X-X, et plus particulièrement du côté tourné vers l'injecteur 12, bien que l'évidement 21 s'étende également en partie de l'autre côté de cet axe X-X, c'est-à-dire du côté de l'échappement.

A l'intérieur de la couronne périphérique plane 20, la face d'extrémité 9 présente également un bossage 22, en saillie vers la chambre de combustion 5 par rapport à la couronne périphérique 20, et excentré du côté de l'axe X-X en regard de l'échappement. Toutefois, comme visible sur la figure 2, la forme en plan du bossage 22 est celle d'un fer à cheval ou d'un croissant, dont la base 22a la plus large en direction radiale est effectivement déportée du côté de l'axe X-X qui est vers l'échappement (en regard de la ou des soupapes 18), mais cette base 22a se prolonge de deux ailes latérales 22b de largeur radiale progressivement décroissante, entre l'évidement 21 et la couronne 20.

Ainsi, l'évidement 21 est entouré, sur la majeure partie de son périmètre, par le bossage en fer à cheval 22, et sur le reste de ce périmètre par un arc 20a de la couronne périphérique 20, cet arc 20a pouvant avoir une épaisseur angulaire symétriquement variable de part et d'autre de la direction diamétrale Z-Z présentée ci-dessous.

L'évidement 21 et le bossage 22 sont chacun symétriques par rapport à une direction diamétrale Z-Z perpendiculaire à l'axe X-X et dans le plan radial contenant l'axe Y-Y de l'injecteur 12.

Le bossage 22 présente un rebord 23 en surplomb au-dessus du raccordement entre l'évidement 21 et le bossage 22, et l'amplitude de ce rebord en surplomb 23, considéré perpendiculairement à l'axe X-X, est maximum sur la direction diamétrale Z-Z et diminue progressivement de part et d'autre de cette direction diamétrale Z-Z dans la base 22a du bossage 22 et les parties des ailes 22b adjacentes à la base 22a, pour s'estomper jusqu'à s'annuler aux extrémités des ailes 22b du bossage 22, comme représenté sur la figure 2 entre le trait plein marquant le rebord 23 et le trait interrompu marquant le fond du surplomb.

En outre, le rebord en surplomb 23 n'est pas délimité par une arête vive, mais présente une section transversale arrondie raccordant une surface concave dans le prolongement de celle de l'évidement 21 et une face supérieure 24 du bossage 22 qui est convexe vers la chambre de combustion 5.

Comme représenté en traits interrompus sur la figure 1, et en variante, le bossage 22 peut présenter, dans sa base 22a, une surface supérieure 24 à convexité moins prononcée mais s'étendant sur une largeur radiale (perpendiculairement à l'axe X-X) plus grande, de sorte que la couronne périphérique 20 présente, derrière la base 22a du bossage 22, une largeur minimale de faible valeur dans sa section 20b sur la direction diamétrale Z-Z (voir figure 2), et que sa largeur augmente progressivement de chaque côté de cette section minimale 20b jusqu'à prendre une largeur maximale dans ses parties 20c sur les côtés des ailes 22b du bossage 22.

Par ailleurs, la profondeur de l'évidement 21, considéré parallèlement à l'axe X-X, augmente sensiblement de la partie de l'évidement 21 qui est adjacente à la base 22a du bossage 22 vers la partie de l'évidement 21 qui est directement adjacente à la couronne périphérique 20, c'est-à-dire située en regard de la ou des soupapes d'admission 16 et sous l'injecteur 12.

Lorsque le piston 3 se dirige vers le point mort haut, le jet de carburant 13 projeté par l'injecteur 12, lors d'une injection tardive, est dirigé dans l'évidement 21, vers le rebord en surplomb 23 au niveau de la base 22a du bossage 22, et sous ce rebord en surplomb 23, et grâce à cette géométrie particulière de la face d'extrémité 9 de la tête de piston 8 et à sa disposition particulière par rapport à l'injecteur 12 incliné et à la bougie 10 axiale, on obtient un guidage mixte, d'une part, aérométrique des parties légères(vapeur et gouttelettes de petit diamètre) et, d'autre part, de paroi solide des parties lourdes (gouttelettes de diamètre important), qui assure une excellente préparation du mélange air/carburant avec une déviation du jet de carburant vers la bougie 10 et une bonne vaporisation du carburant, ainsi qu'un taux élevé de turbulence locale dans le mélange carburant/comburant dans la zone centrale de l'évidement 21, de sorte qu'en fonctionnement en mélange pauvre, on obtient une bonne stratification de ce mélange en regard de la bougie 10, pour une bonne combustion de ce mélange.

De même, en alimentation en air et carburant dans des proportions stoechiométriques et homogène utilisant une injection en phase d'aspiration, la géométrie proposée permet de créer une zone de mélange stoechiométrique efficacement obtenue dans le centre de la chambre de combustion 5, à proximité immédiate des électrodes 11 de la bougie 10.

Durant la compression et la phase de combustion, le transfert des gaz non brûlés dans la zone périphérique de la chambre 5 sous la ou les soupapes d'échappement 18 est amélioré grâce au dispositif de chasse de ces gaz, obtenu par la forme convexe de la face supérieure 24 du bossage 22, dans sa base 22a radialement la plus large comme dans ses ailes 22b radialement amincies, ainsi que grâce à l'augmentation progressive de la largeur radiale de la couronne périphérique 20, de sa zone de plus petite section 20b sur la direction diamétrale Z-Z, derrière la base 22a du bossage 22, jusqu'à ses parties latérales 20c les plus larges, derrière les ailes 22b du bossage 22 par rapport à l'axe X-X.

Ainsi, cette forme convexe du bossage 22 entre son rebord en surplomb 23 et la couronne périphérique 20 permet de diminuer le volume occupé dans la chambre de combustion 5 par un mélange ne présentant pas de bonnes caractéristiques de combustion.

En outre, la section arrondie du rebord en surplomb 23, et non en arête vive, permet de produire dans la chambre 5 des mouvements de « swirl » du gaz, qui, autrement, devraient au moins partiellement être générés par des moyens particuliers agencés en amont dans le circuit d'alimentation en air.

Bien entendu, la profondeur variable de l'évidement 21 peut être optimisée en fonction, notamment, du diamètre du piston 3 ainsi que de l'inclinaison de l'axe Y-Y de l'injecteur 12 sur l'axe X-X du piston 3 et de la chambre 5, cette inclinaison étant de préférence comprise entre environ 80° et environ 45°.

## Revendications

1. Piston à tête à guidage actif, pour moteur (1) à combustion interne, en particulier du type à allumage commandé et injection directe de carburant, le piston (3) ayant une tête (8) dont une face d'extrémité (9) délimite une chambre de combustion (5) avec un cylindre (2) du moteur, dans lequel ledit piston (3) est monté coulissant axialement, et avec une cavité (6) ménagée, en regard de la tête (8) du piston (3), dans une culasse (7) rapportée sur le cylindre (2) du moteur, ladite face d'extrémité (9) présentant, à l'intérieur d'une couronne périphérique plane (20), perpendiculaire à l'axe (X-X) du piston (3), d'une part, un évidement (21) en bol à fond concave ouvert vers la chambre de combustion (5), et excentré d'un côté de l'axe (X-X) du piston (3), et, d'autre part, un bossage (22), en saillie vers la chambre de combustion (5) par rapport à la couronne périphérique (20), et excentré de l'autre côté de l'axe (X-X) du piston, lesdits évidement (21) et bossage (22) étant symétriques par rapport à une direction diamétrale (Z-Z) de la tête de piston (8), **caractérisé en ce que** ledit bossage (22) présente, vu en plan, parallèlement à l'axe (X-X) du piston (3), une forme sensiblement en fer à cheval qui entoure partiellement ledit évidemment (21), entouré par ailleurs par un arc (20a) de ladite couronne périphérique plane (20), et **en ce que** le bossage (22) présente un rebord (23) en surplomb au-dessus du raccordement dudit évidement (21) audit bossage (22), au niveau de la base (22a) du bossage (22) sensiblement en fer à cheval ainsi que des ailes (22b) du bossage (22) en fer à cheval qui sont adjacentes à ladite base (22a), et **en ce que** l'amplitude du surplomb dudit rebord (23), considérée dans un plan perpendiculaire à l'axe (X-X) du piston (3), s'atténue progressivement du centre de la base (22a) du bossage (22) en fer à cheval vers l'extrémité de chacune des deux ailes (22b) dudit bossage (22), extrémités au niveau desquelles le surplomb est sensiblement annulé.

2. Piston selon la revendication 1, **caractérisé en ce que** ledit rebord (23) en surplomb est un rebord à section transversale arrondie.

3. Piston selon l'une quelconque des revendications 1 et 2, **caractérisé en ce que** la profondeur dudit évidemment (21), parallèlement à l'axe (X-X) du piston (3), est variable et plus importante dans une partie de l'évidement (21) qui est non-adjacente à ladite base (22a) dudit bossage en fer à cheval (22).

4. Piston selon l'une quelconque des revendications 1 à 3, **caractérisé en ce que** ledit bossage en fer à cheval (22) présente une face convexe (24) tournée vers la chambre de combustion (5), et de largeur radiale, par rapport à l'axe (X-X) du piston (3), qui est maximum dans ladite direction diamétrale (Z-Z) de symétrie de l'évidement (21) et du bossage (22) de la tête de piston (8) et diminue progressivement de part et d'autre de cette direction (Z-Z), dans les ailes (22b) du bossage en fer à cheval (22).

5. Piston selon l'une quelconque des revendications 1 à 4, **caractérisé en ce que** ladite couronne périphérique plane (20) présente une largeur radiale variable, qui est minimum sur ladite direction diamétrale (Z-Z), et du côté situé derrière ledit bossage (22) par rapport audit évidemment (21), la largeur radiale de ladite couronne périphérique (20) augmentant progressivement de part et d'autre de sa section (20b)de largeur minimale jusque sur les côtés des ailes (22b) du bossage en fer à cheval (22).

6. Piston selon l'une quelconque des revendications 1 à 5, **caractérisé en ce que** ledit arc (20a) de couronne périphérique (20) a une épaisseur angulaire symétriquement variable de part et d'autre de ladite direction diamétrale (Z-Z).

7. Chambre de combustion (5), pour moteur (1) à combustion interne à allumage commandé et injection directe, délimitée entre une tête (8) d'un piston (3), coulissant axialement dans un cylindre (2) du moteur (1), et ledit cylindre (2) ainsi qu'une cavité (6) ménagée, en regard de ladite tête de piston (8), dans une culasse (7) rapportée sur ledit cylindre (2), une bougie d'allumage (10) étant implantée dans la culasse (7) sensiblement coaxialement au piston (3), et un injecteur (12) de carburant étant également implanté dans la culasse (7) de sorte à délivrer directement dans la chambre de combustion (5) au moins un jet de carburant (13) orienté selon un axe (Y-Y) incliné sur l'axe (X-X) du piston (3), **caractérisée en ce que** ledit piston (3) est un piston selon l'une quelconque des revendications 1 à 6, et **en ce que** l'axe incliné (Y-Y) dudit jet de carburant (13) est dans un plan sensiblement radial passant par l'axe (X-X) du piston (3) et par ladite direction diamétrale (Z-Z) de symétrie desdits évidement (21) et bossage (22) de la tête de piston(8), ledit jet de carburant (13) étant dirigé dans ledit évidement (21) et vers ledit rebord en surplomb (23) de la base (22a) dudit bossage en fer à cheval (22).

8. Chambre de combustion selon la revendication 7, **caractérisée en ce que** ladite cavité (6) correspondante de la culasse (7) est une cavité sensiblement en forme de toit à deux pans inclinés (6a, 6b), dans l'un (6a) desquels débouchent ledit injecteur (12) et au moins un conduit (15) d'admission d'air sélectivement obturé et ouvert par au moins une soupape d'admission (16), sensiblement en regard dudit évidement (21) de la tête de piston (8), tandis qu'au moins un conduit d'échappement (19), sélectivement obturé et ouvert par au moins une soupape d'échappement (18), débouche dans l'autre (6b) desdits pans inclinés, sensiblement en regard dudit bossage (22) de la tête de piston (8).

9. Chambre de combustion selon l'une quelconque des revendications 7 et 8, **caractérisée en ce que** ledit injecteur (12) est incliné sur l'axe (X-X) du piston (3) de sorte que l'axe (Y-Y) dudit jet de carburant (13) forme un angle compris entre environ 80° et environ 45° sur l'axe (X-X) du piston (3).

## Patentansprüche

1. Kolben mit Aktivführungsboden für einen Verbrennungsmotor (1), insbesondere vom Typ mit gesteuerter Zündung und Treibstoffdirekteinspritzung, wobei der Kolben (3) einen Boden (8) hat, dessen eine Endfläche (9) eine Verbrennungskammer (5) mit einem Motor-Zylinder (2), in dem der Kolben (3) axial verschieblich angebracht ist, und mit einer Vertiefung (6) abgrenzt, die gegenüberliegend zum Boden (8) des Kolbens (3) in einem am Motor-Zylinder (2) angebauten Zylinderkopf (7) angeordnet ist, wobei die Endfläche (9) innerhalb einer ebenen Umfangskrone (20), die senkrecht zur Achse (X-X) des Kolbens (3) ist, einerseits eine schalenartige, zur Verbrennungskammer (5) hin offene und auf einer Seite der Achse (X-X) des Kolbens (3) exzentrisch gelegene Aussparung (21) mit konkavem Boden und andererseits einen zur Verbrennungskammer (5) in bezug auf die Umfangskrone (20) vorstehenden und auf der anderen Seite der Achse (X-X) des Kolbens (3) exzentrisch gelegenen Höcker (22) aufweist, wobei die Aussparung (21) und der Höcker (22) symmetrisch in bezug auf eine Durchmesserrichtung (Z-Z) des Kolbenbodens (8) sind, **dadurch gekennzeichnet, daß** der Höcker (22) im Grundriß parallel zur Achse (X-X) des Kolbens (3) eine Form im wesentlichen eines Hufeisens aufweist, das teilweise die Aussparung (21) umgibt, die außerdem durch einen Bogen (20a) der ebenen Umfangskrone (20) umgeben ist, und daß der Höcker (22) eine überstehende Kante (23) oberhalb der Verbindung der Aussparung (21) mit dem Höcker (22) im Bereich der Basis (22a) des im wesentlichen hufeisenförmigen Höckers (22) sowie Flügel (22b) des hufeisenförmigen Höckers (22) aufweist, die an die genannte Basis (22a) angrenzen, und daß sich die Amplitude des Überstands der Kante (23), betrachtet in einer zur Achse (X-X) des Kolbens (3) senkrechten Ebene, fortschreitend von der Mitte der Basis (22a) des hufeisenförmigen Höckers (22) zum Ende jedes der beiden Flügel (22b) des Höckers (22) hin abschwächt, wobei in Höhe der Enden derselben der Überstand im wesentlichen verschwunden ist.

2. Kolben nach Anspruch 1, **dadurch gekennzeichnet, daß** die überstehende Kante (23) eine im Querschnitt runde Kante ist.

3. Kolben nach einem der Ansprüche 1 und 2, **dadurch gekennzeichnet, daß** die Tiefe der Aussparung (21) parallel zur Achse (X-X) des Kolbens (3) veränderlich und in einem Teil der Aussparung (21), der nicht an die Basis (22a) des hufeisenförmigen Höckers (22) angrenzt, erheblicher ist.

4. Kolben nach einem der Ansprüche 1 bis 3, **dadurch gekennzeichnet, daß** der hufeisenförmige Höcker (22) eine konvexe Fläche (24) aufweist, die zur Verbrennungskammer (5) hin gewandt ist und eine radiale Breite in bezug auf die Achse (X-X) des Kolbens (3) hat, die in der genannten Symmetriedurchmesserrichtung (Z-Z) der Aussparung (21) und des Höckers (22) des Kolbenbodens (8) maximal ist und fortschreitend beiderseits dieser Richtung (Z-Z) in den Flügeln (22b) des hufeisenförmigen Höckers (22) abnimmt.

5. Kolben nach einem der Ansprüche 1 bis 4, **dadurch gekennzeichnet, daß** die ebene Umfangskrone (20) eine veränderliche radiale Breite aufweist, die über die genannte Durchmesserrichtung (Z-Z) und auf der in bezug auf die Aussparung (21) hinter dem Höcker (22) gelegenen Seite minimal ist, wobei die radiale Breite der Umfangskrone (20) beiderseits ihres Abschnitts (20b) minimaler Breite bis an die Seiten der Flügel (22b) des hufeisenförmigen Höckers (22) fortschreitend zunimmt.

6. Kolben nach einem der Ansprüche 1 bis 5, **dadurch gekennzeichnet, daß** der genannte Bogen (20a) der Umfangskrone (20) eine beiderseits der genannten Durchmesserrichtung (Z-Z) symmetrisch veränderliche winkelmäßige Dicke hat.

7. Verbrennungskammer (5) für einen Verbrennungsmotor (1) mit gesteuerter Zündung und Direkteinspritzung, die zwischen einem Boden (8) eines Kolbens (3), der in einem Zylinder (2) des Motors (1) axial verschieblich ist, und dem Zylinder (2) sowie einer Vertiefung (6) abgegrenzt ist, die gegenüberliegend zum Kolbenboden (8) in einem am genannten Zylinder (2) angebauten Zylinderkopf (7) angeordnet ist, wobei im Zylinderkopf (7) im wesentlichen koaxial zum Kolben (3) eine Zündkerze (10) eingebettet ist, und auch eine Treibstoff-Einspritzdüse (12) im Zylinderkopf (7) eingebettet ist, um direkt in die Verbrennungskammer (5) wenigstens einen Treibstoffstrahl (13) zu liefern, der entsprechend einer Achse (Y-Y) ausgerichtet ist, die gegenüber der Achse (X-X) des Kolbens (3) geneigt ist, **dadurch gekennzeichnet, daß** der Kolben (3) ein Kolben nach einem der Ansprüche 1 bis 6 ist und daß die geneigte Achse (Y-Y) des genannten Treibstoffstrahls (13) in einer im wesentlichen radialen Ebene ist, die durch die Achse (X-X) des Kolbens (3) und durch die genannte Symmetriedurchmesserrichtung (Z-Z) der Aussparung (21) und des Höckers (22) des Kolbenbodens (8) verläuft, wobei der genannte Treibstoffstrahl (13) in die Aussparung (21) und zur genannten überstehenden Kante (23) der Basis (22a) des hufeisenförmigen Höckers (22) hin gerichtet ist.

8. Verbrennungskammer nach Anspruch 7, **dadurch gekennzeichnet, daß** die entsprechende Vertiefung (6) des Zylinderkopfes (7) eine Vertiefung ist, die im wesentlichen die Form eines Daches mit zwei geneigten Dachschrägen (6a, 6b) hat, wobei in eine (6a) davon die Einspritzdüse (12) und wenigstens ein Lufteinlaßkanal (15), der durch wenigstens ein Einlaßventil (16) selektiv geschlossen und geöffnet wird, zur Aussparung (21) des Kolbenbodens (8) im wesentlichen gegenüberliegend münden, wogegen wenigstens ein Auslaßkanal (19), der durch zumindest ein Auslaßventil (18) selektiv geschlossen und geöffnet wird, in die andere (6b) der genannten geneigten Dachschrägen im wesentlichen gegenüberliegend zum Höcker (22) des Kolbenbodens (8) mündet.

9. Verbrennungskammer nach einem der Ansprüche 7 und 8, **dadurch gekennzeichnet, daß** die Einspritzdüse (12) gegenüber der Achse (X-X) des Kolbens (3) so geneigt ist, daß die Achse (Y-Y) des genannten Treibstoffstrahls (13) zur Achse (X-X) des Kolbens (3) einen Winkel bildet, der zwischen etwa 80° und etwa 45° liegt.

## Claims

1. Piston with an active guide head, for an internal combustion engine (1), in particular of the type having controlled ignition and direct fuel injection, the piston (3) having a head (8) of which an end face (9) delimits a combustion chamber (5) in conjunction with a cylinder (2) of the engine, in which said piston (3) is mounted so as to slide axially, and with a cavity (6) disposed, facing the head (8) of the piston (3), in a cylinder head (7) joined to the cylinder (2) of the engine, said end face (9) having, inside a planar peripheral ring (20), perpendicular to the axis (X-X) of the piston (3), firstly, a bowl-shaped recess (21) with a concave base open towards the combustion chamber (5) and eccentrically disposed on one side of the axis (X-X) of the piston (3), and, secondly, a boss (22) projecting towards the combustion chamber (5) standing proud of the peripheral ring (20) and disposed eccentrically on the other side of the axis (X-X) of the piston, said recess (21) and boss (22) being symmetrical relative to a diametric direction (Z-Z) of the piston head (8), **characterised in that** in plan view, parallel with the axis (X-X) of the piston (3), said boss (22) is of a substantially horseshoe shape partially surrounding said recess (21), which is also surrounded by an arc (20a) of said planar peripheral ring (20), and **in that** the boss (22) has a rim (23) overhanging the join of said recess (21) to said boss (22), on a level with the base (22a) of the substantially horseshoe-shaped boss (22) as well as the wings (22b) of the horseshoe-shaped boss (22) which are adjacent to said base (22a), and **in that** the amplitude of the overhang of said rim (23) viewed in a plane perpendicular to the axis (X-X) of the piston (3), becomes progressively less pronounced from the centre of the base (22a) of the horseshoe-shaped boss (22) towards the end of each of the two rings (22b) of said boss (22), at which ends the overhang is substantially zero.

2. Piston according to claim 1, **characterised in that** said overhanging rim (23) is a rim with a rounded cross section.

3. Piston according to any one of claims 1 and 2, **characterised in that** the depth of said recess (21), parallel with the axis (X-X) of the piston (3) is variable, and larger in a part of the recess (21) not adjacent to said base (22a) of said horseshoe-shaped boss (22).

4. Piston according to any one of claims 1 to 3, **characterised in that** said horseshoe-shaped boss (22) has a convex face (24) directed towards the combustion chamber (5) and of a radial width, relative to the axis (X-X) of the piston (3), which is at its maximum in said diametric direction (Z-Z) of symmetry of the recess (21) and boss (22) of the piston head (8) and decreases progressively on either side of this direction (Z-Z) in the wings (22b) of the horseshoe-shaped boss (22).

5. Piston according to any one of claims 1 to 4, **characterised in that** said planar peripheral ring (20) has a variable radial width which is at its minimum along said diametric direction (Z-Z) and, on the side located behind said boss (22) relative to said recess (21), the radial width of said peripheral ring (20) increases progressively on either side of the section (20b) of the minimum width as far as the sides of the wings (22b) of the horseshoe-shaped boss (22).

6. Piston according to any one of claims 1 to 5, **characterised in that** said arc (20a) of the peripheral ring (20) has an angular thickness which is symmetrically variable on either said of said diametric direction (Z-Z).

7. Combustion chamber (5), for an internal combustion engine (1) with controlled ignition and direct injection, delimited between a head (8) of a piston (3), axially slidable in a cylinder (2) of the engine (1), and said cylinder (2) as well as a cavity (6) arranged facing said piston head (8) in a cylinder head (7) joined to said cylinder (2), an ignition plug (10) being mounted in the cylinder head (7) substantially coaxial with the piston (3), and a fuel injector (12) also being mounted in the cylinder head (7) to deliver at least one fuel jet (13) directly into the combustion chamber (5), said at least one fuel jet (13) being directed along an inclined axis (Y-Y) relative to the axis (X-X) of the piston (3), **characterised in that** said piston (3) is a piston according to any one of claims 1 to 7, and **in that** the inclined axis (Y-Y) of said fuel jet (13) is in a substantially radial plane intersecting the axis (X-X) of the piston (3) and said diametric direction (Z-Z) of symmetry of said recess (21) and boss (22) of the piston head (8), said fuel jet (13) being directed into said recess (21) and towards said overhanging rim (23) of the base (22a) of said horseshoe-shaped boss (22).

8. Combustion chamber according to claim 7, **characterised in that** said corresponding cavity (6) of the cylinder head (7) is a substantially a roof-shaped cavity with two inclined faces (6a, 6b), in one (6a) of which there open said injector (12) and at least one air admission duct (15) selectively closed and opened by at least one admission valve (16), substantially facing said recess (21) of the piston head (8), whilst at least one exhaust duct (19), selectively closed and opened by at least one exhaust valve (18), opens into the other (6b) of said inclined faces, substantially facing said boss (22) of the piston head (8).

9. Combustion chamber according to any one of claims 7 and 8, **characterised in that** said injector (12) is inclined relative to the axis (X-X) of the piston (3) so that the axis (Y-Y) of said fuel jet (13) subtends an angle ranging between approximately 80° and approximately 45° with the axis (X-X) of the piston (3).
